# EUROPEAN PATENT APPLICATION

(11) **EP 4 832 273 A1**
(43) Date of publication of application: **28.10.2026**
(21) Application number: 25223736.7
(22) Date of filing: 16.12.2025
(51) Int. Cl.: H02B 7/06, H02B 13/025

(54) **PREFABRICATED SUBSTATION**

(30) Priority: 25.04.2025 CN 202520822751 U
(71) Applicant: Sungrow Power Supply Co., Ltd., Hefei, Anhui 230088 (CN)
(72) Inventor: PAN, Hanfei, Hefei, Anhui, 230088 (CN); PAN, Zhiyuan, Hefei, Anhui, 230088 (CN); WANG, Xiaohu, Hefei, Anhui, 230088 (CN)
(74) Representative: Prinz & Partner mbB

(57) **Abstract**

A prefabricated substation is disclosed, including a unit load device (1) and a switchgear (2). The switchgear (2) has a first end (2c) disposed on the unit load device (1) and a second end (2d) arranged opposite to the first end (2c). A pressure relief structure (23) is provided at the second end (2d) of the switchgear (2), and the unit load device (1) has an avoidance space (3) for providing an arc venting passage. The first end (2c) of the switchgear (2), the pressure relief structure (23), and the avoidance space (3) are arranged sequentially in a first direction in which the first (2c) and second (2d) ends of the switchgear (2) are arranged. When pressure and arc is required to be discharged out of the switchgear (2), the gas and arc in the switchgear (2) may pass through the pressure relief structure (23) into the arc venting passage provided by the avoidance space (3), thereby enabling pressure and arc to be discharged at the second end (2d) of the switchgear (2) of the prefabricated substation. Therefore, no arc venting space is required at the foundation, which effectively simplifies the design of foundation, reduces the cost of foundation, so as to facilitate the promotion and application of the prefabricated substation.

## Description

### FIELD

The present application relates to the technical field of prefabricated substations and, in particular, to a prefabricated substation.

### BACKGROUND

A switchgear is used in a prefabricated substation to connect the prefabricated substation to the power grid and provide line protection.

An indoor switchgear is usually used as the switchgear in the prefabricated substation. The switchgear provides downward arc venting in view of arc flash occurred in the lower part of the switchgear. Thus, it is required to design an arc venting space on the foundation of the prefabricated substation, resulting in complex design and high cost of foundation. Consequently, it is unfavorable for the promotion and application of the prefabricated substation.

Accordingly, it is desired for those skilled in the art to simplify the design of foundation and reduce the cost of foundation so as to facilitate the promotion and application of the prefabricated substation.

### SUMMARY

There is provided in the present application a prefabricated substation, which can simplify the design of foundation and reduce the cost of foundation, so as to facilitate the promotion and application of the prefabricated substation.

In order to achieve the above object, the following technical solutions are proposed according to the present application. The invention is set out in the appended set of claims.

A prefabricated substation includes a unit load device and a switchgear.

The switchgear has a first end disposed on the unit load device and a second end arranged opposite to the first end.

A pressure relief structure is provided at the second end of the switchgear. The unit load device has an avoidance space for providing an arc venting passage. The first end of the switchgear, the pressure relief structure and the avoidance space are arranged sequentially in a first direction in which the first and second ends of the switchgear are arranged.

In an embodiment, the unit load device is implemented as a container having a switchgear compartment with an opening, and the opening is configured as the avoidance space.

In an embodiment, the switchgear compartment is in a frame structure.

In an embodiment, the container includes an integrated base, support posts and a top frame.

The top frame is connected to the integrated base via the support posts. The top frame, the support posts and the integrated base delimit an integrated chamber, and part of the integrated chamber is configured as the switchgear compartment.

In an embodiment, the top frame includes a first crossbeam, a second crossbeam and third crossbeams. The first crossbeam and the second crossbeam are arranged side by side, and the third crossbeams are connected between the first crossbeam and the second crossbeam, and both the first crossbeam and the second crossbeam are connected to the support posts.

In an embodiment, the top frame further includes at least one oblique beam connecting the first crossbeam and the third crossbeam and/or connecting the second crossbeam and the third crossbeam.

In an embodiment, the container is in a box structure.

In an embodiment, the unit load device is implemented as a pallet.

In an embodiment, the pressure relief structure includes a pressure relief opening and a pressure relief plate. The pressure relief opening is disposed at the second end of the switchgear, and the pressure relief plate is connected to a cabinet body of the switchgear and is configured to open and close the pressure relief opening.

In an embodiment, at least part of the pressure relief plate is detachably connected to the cabinet body.

In an embodiment, one end of the pressure relief plate is hinged to the cabinet body, and the other end of the pressure relief plate is connected to the cabinet body with a lap joint or adhesive.

In an embodiment, the switchgear has a cabinet door side and a back side opposite to the cabinet door side. The pressure relief structure is positioned at the second end of the switchgear, and is positioned farther from the cabinet door side than from the back side.

In an embodiment, a lifting structure is provided at the second end of the switchgear. The avoidance space is positioned on a side of the second end of the switchgear facing away from the first end of the switchgear in the first direction. The avoidance space is configured to allow the switchgear to pass through.

In an embodiment, the switchgear compartment is delimited, defined or formed by the third crossbeams, the first crossbeam, the second crossbeam, the integrated base, and the support posts.

In an embodiment, the container further has another compartment which is of a box structure formed at least by box panels and the integrated base.

In the prefabricated substation according to the present application, the first end of the switchgear is disposed on the unit load device, and the second end of the switchgear is arranged opposite to the first end is provided with the pressure relief structure. The unit load device has an avoidance space for providing an arc venting passage. The first end of the switchgear, the pressure relief structure, and the avoidance space are arranged in order in a first direction in which the first and second ends of the switchgear are arranged. Thus, when pressure and arc venting is required in the switchgear, the gas and arc in the switchgear may pass through the pressure relief structure into the arc venting passage provided by the avoidance space, thereby enabling pressure relief and arc venting at the second end of the switchgear of the prefabricated substation. Therefore, no arc venting space is required at the foundation, which effectively simplifies the design of foundation, reduces the cost of foundation, so as to facilitate the promotion and application of prefabricated substations.

### BRIEF DESCRIPTION OF THE DRAWINGS

To more clearly illustrate solutions in embodiments of the present application or in the conventional technology, drawings required in description of the embodiments or the conventional technology will be briefly introduced hereinafter. Apparently, the drawings in the following description only relate to some embodiments of the present application, and other drawings may be obtained for those skilled in the art based on these drawings without any creative efforts.
FIG. 1 is a schematic structural view of a prefabricated substation according to a first embodiment of the present application;
FIG. 2 is an enlarged structural view of part A in FIG. 1;
FIG. 3 is a front view of the prefabricated substation according to the first embodiment of the present application;
FIG. 4 is an enlarged structural view of part B in FIG. 3;
FIG. 5 is a top view of the prefabricated substation according to the first embodiment of the present application; and
FIG. 6 is a schematic structural view of a prefabricated substation according to a second embodiment of the present application.

**List of reference numerals:**

| | | | |
|---|---|---|---|
| 100. | Prefabricated substation; | | |
| 1. | unit load device; | 1a. | container; |
| 1b. | pallet; | 1c. | integrated chamber; |
| 2. | switchgear; | 3. | avoidance space; |
| 11. | integrated base; | 12. | top frame; |
| 121. | first crossbeam; | 122. | second crossbeam; |
| 123. | third crossbeams; | 124. | oblique beam; |
| 13. | support post; | 14. | switchgear compartment; |
| 141. | opening; | 2a. | cabinet door side; |
| 2b. | back side; | 2c. | first end; |
| 2d. | second end; | 21. | cabinet door; |
| 22. | cabinet body; | 23. | pressure relief structure; |
| 231. | pressure relief opening; | 232. | pressure relief plate; |
| 24. | lifting structure; | 24a. | lifting lug. |

### DETAILED DESCRIPTION OF THE EMBODIMENTS

Hereinafter, solutions in embodiments of the present application will be described clearly and completely with reference to the drawings relating to the embodiments of the present application. Apparently, the described embodiments are only some rather than all embodiments of the present application. Based on the embodiments of the present application, all other embodiments obtained by those skilled in the art without any creative efforts fall into the scope of protection of the present application.

The solutions in embodiments of the present application will be described clearly and completely below with reference to the drawings relating to the embodiments of the present application. The terms used in the following embodiments are only for the purpose of describing particular embodiments and are not intended to limit the present application. As used in the specification and appended claims of the present application, the singular "a", "an", "said", "the above", "the" and "this" are intended to include, for example, "one or more", unless otherwise indicated clearly in the context. It should also be understood that, in the embodiments of the present application, the term "one or more" refers to one, two, or more, and the term "and/or" describes relationships of associated items and indicates that there may be three cases. For example, A and/or B may indicate: the existence of A alone, the existence of both A and B, and the existence of B alone. In each case, the number of A may be one or more, and the number of B may be one or more. The symbol "/" generally indicates that the items before and after it are associated in an "or" relationship.

References to "one embodiment", "some embodiments", etc. described in this specification indicate that a particular feature, structure or characteristic described in connection with the embodiment(s) is included in one or more embodiments of the present application. Therefore, the phrases "in one embodiment", "in some embodiments", "in some other embodiments", "in yet other embodiments", etc. appearing in various places in this specification do not necessarily refer to the same embodiment(s), but instead mean "one or more but not all embodiments", unless otherwise specifically emphasized. The terms "including", "comprising", "having" and variations thereof mean "including but not limited to", unless otherwise specifically emphasized.

The word "multiple" or "plurality of" in the embodiments of the present application refers to two or more. It should be noted that, in the description of the embodiments of the present application, the words such as "first", "second" and the like are merely for distinguishing purpose, and should not be construed as indicating or implying order.

The terms "parallel" and "perpendicular" in the present application refer to "substantially parallel" and " substantially perpendicular" in actual operation. The term "substantially parallel" may be understood as being parallel with a certain tolerance. Similarly, the term "substantially perpendicular" may be understood as being perpendicular with a certain tolerance.

A prefabricated substation is provided according to embodiments of the present application, which simplifies the design of foundation and reduces the cost of foundation, so as to facilitate the promotion and application of the prefabricated substation.

The prefabricated substation will be described below with reference to the accompanying drawings by means of two embodiments.

### First embodiment of the present application

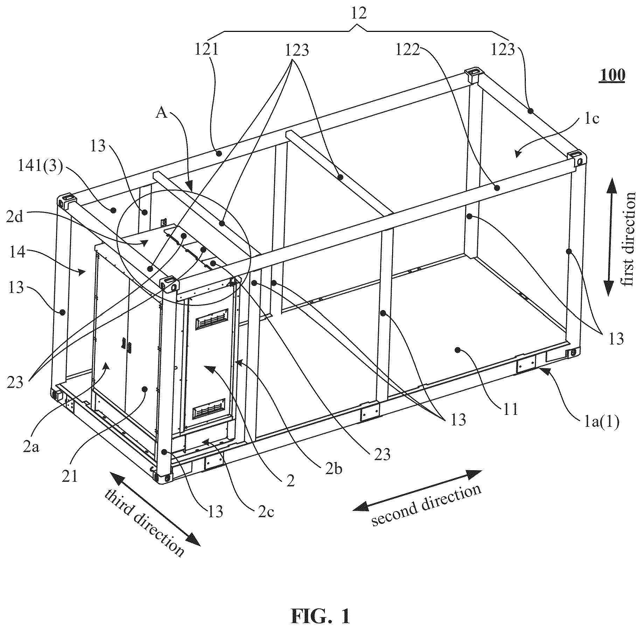

As shown in FIG. 1, a prefabricated substation 100 according to the first embodiment of the present application includes a unit load device 1 and a switchgear 2 disposed in the unit load device 1.

It should be noted that the prefabricated substation 100 further includes a low-voltage device, a transformer, a power distribution cabinet, etc. The low-voltage device includes at least one of a power conversion device and a low-voltage cabinet. The power conversion device may be an inverter, a converter, or the like.

In the first embodiment of the present application, the unit load device 1 is implemented as a container 1a.

The switchgear 2 may be a ring main unit, which may be referred to as a medium-voltage switchgear, and is configured to connect the prefabricated substation 100 to the power grid and provide line protection. The switchgear 2 may be of any other type, which is not limited in the first embodiment of the present application.

The switchgear 2 is an outdoor switchgear which may be used directly outdoors.

The switchgear 2 has a first end 2c placed on the container 1a and a second end 2d arranged opposite to the first end 2c. It may be understood that the first end 2c of the switchgear 2 is connected to the container 1a. The first end 2c and the second end 2d of the switchgear 2 are arranged in a first direction. The first direction may be considered as the height direction of the switchgear 2 or the height direction of the container 1a. The first end 2c may be considered as the bottom end of the switchgear 2, and the second end 2d may be considered as the top end of the switchgear 2.

Exemplarily, the container 1a is in the shape of a rectangular prism. The switchgear 2 is positioned at the end of the container 1a in a second or third direction. There is an angle formed between the second and third directions. For example, the second direction is perpendicular to the third direction, and the first direction is perpendicular to a plane defined by the second and third directions. In this way, the switchgear 2 is positioned close to the side, reducing the impact of pressure relief from the switchgear 2 on other electrical devices.

The second direction may be considered as the length direction of the container 1a, and the third direction may be considered as the width direction of the container 1a. In this case, the second direction is perpendicular to the third direction.

In actual situations, the switchgear 2 may be positioned at any other location in the container 1a.

As shown in FIG. 1, the switchgear 2 has a cabinet door side 2a, and the switchgear 2 is provided with a cabinet door 21 on the cabinet door side 2a. The cabinet door 21 faces the side of the container 1a in the second direction. Alternatively, the cabinet door 21 of the switchgear 2 may face the side of the container 1a in the third direction.

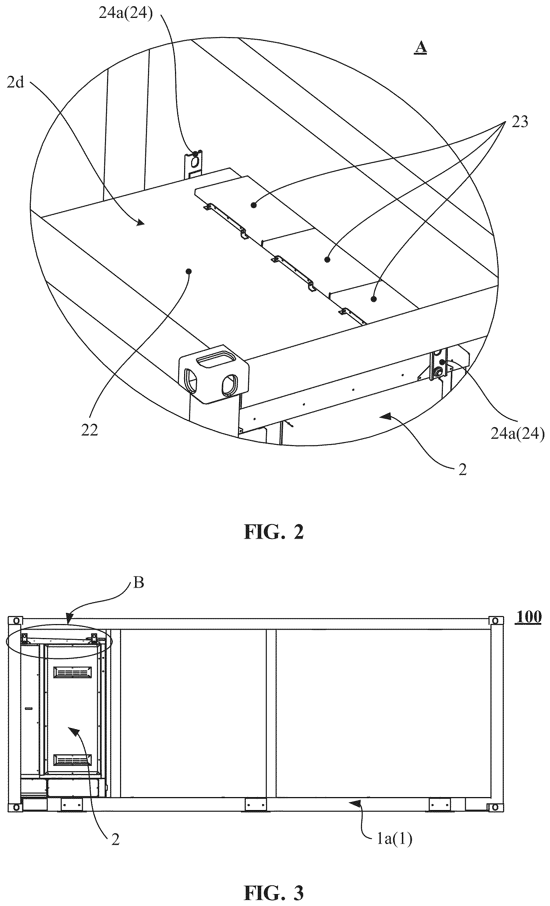

When an arc fault occurs in the switchgear 2, it may result in intense electric arc and arc pressure, which must be discharged to the outside to ensure the safety of devices and personnel. Accordingly, a pressure relief structure 23 is provided at the second end 2d of the switchgear 2. It is understood that the switchgear 2 is of a top arc venting structure. As shown in FIG. 2, the switchgear 2 includes a cabinet body 22. The first end 2c of the switchgear 2 may be considered as the first end 2c of the cabinet body 22, and the second end 2d of the switchgear 2 may be considered as the second end 2d of the cabinet body 22. The pressure relief structure 23 is provided at the second end 2d of the cabinet body 22.

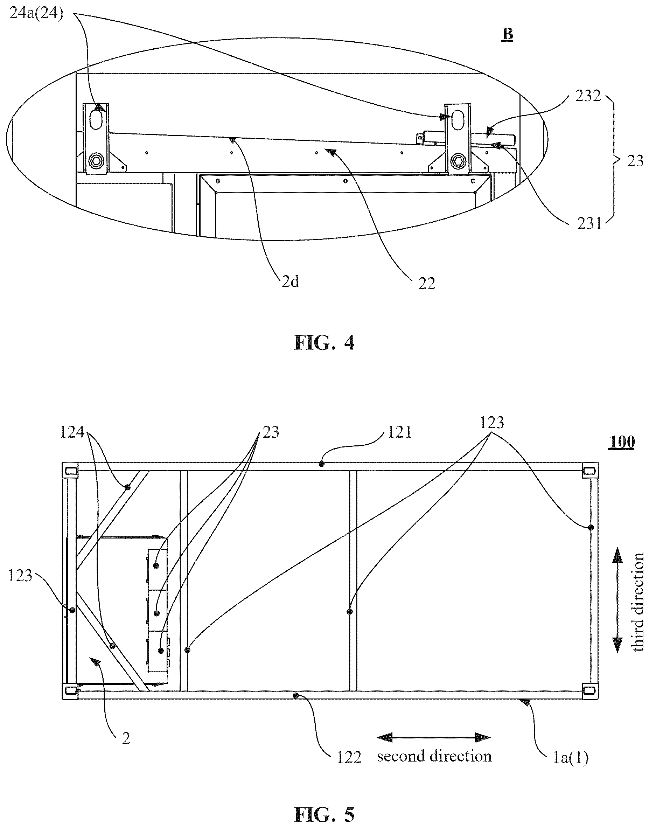

When pressure relief is required from the switchgear 2, the pressure relief structure 23 may be opened to allow the gas and arc inside the switchgear 2 to be discharged out of the switchgear 2. As shown in FIGS. 3 and 4, the pressure relief structure 23 includes a pressure relief opening 231 and a pressure relief plate 232. The pressure relief opening 231 is provided at the second end 2d of the cabinet body 22, and the pressure relief plate 232 is connected to the cabinet body 22 and is configured to open and close the pressure relief opening 231. When pressure relief is required from the switchgear 2, the pressure relief plate 232 opens the pressure relief opening 231. When no pressure relief is required from the switchgear 2, the pressure relief plate 232 closes the pressure relief opening 231.

At least part of the pressure relief plate 232 is detachably connected to the cabinet body 22, in order to facilitate opening or closing of the pressure relief opening 231 by the pressure relief plate 232. Exemplarily, one end of the pressure relief plate 232 is hinged to the cabinet body 22, and the other end of the pressure relief plate 232 is connected to the cabinet body 22 with a lap joint or adhesive, detachably connecting the other end of the pressure relief plate 232 to the cabinet body 22. The structure for connection the pressure relief plate 232 is not limited in the first embodiment of the present application.

In actual situations, the pressure relief structure 23 may be in another structure, which is not limited in the embodiment of the present application.

As previously described, the switchgear 2 has the cabinet door side 2a. The switchgear 2 further has a back side 2b opposite to the cabinet door side 2a. The pressure relief structure 23 is positioned at the second end 2d of the switchgear 2 and is positioned close to the back side 2b of the switchgear 2. In this way, the pressure relief structure 23 is positioned away from the cabinet door 21, reducing the impact on personnel operation of the switchgear 2.

The pressure relief structure 23 is positioned close to the back side 2b of the switchgear 2, which may be understood to mean that the pressure relief structure 23 is positioned farther from the cabinet door side 2a than from the back side 2b. Exemplarily the cabinet door side 2a and the back side 2b are arranged in the second direction, and the pressure relief structure 23 is positioned farther from the cabinet door side 2a than from the back side 2b in the second direction.

The container 1a has an avoidance space 3 providing an arc venting passage. The avoidance space 3 is positioned on the side of the pressure relief structure 23 facing away from the second end 2d of the switchgear 2 in the first direction, which may be understood to mean that the first end 2c of the switchgear 2, the pressure relief structure 23, and the avoidance space 3 are sequentially arranged in the first direction. At least part of the projection of the avoidance space 3 in the first direction overlaps with at least part of the projection of the pressure relief structure 23 in the first direction, so as to enable arc venting through the avoidance space 3. For example, part of the projection of the avoidance space 3 overlaps with the projection of the pressure relief structure 23 in the first direction, or part of the projection of the avoidance space 3 overlaps with part of the projection of the pressure relief structure 23 in the first direction.

As previously described, the unit load device 1 is the container 1a. In this case, the container 1a has a switchgear compartment 14 with an opening 141. The opening 141 may serve as the avoidance space 3. It is understood that switchgear compartment 14 is not enclosed, and the opening 141 of the switchgear compartment 14 is designed as an avoidance structure.

In the first embodiment of the present application, when pressure and arc is required to be discharged from the switchgear 2, the gas and arc in the switchgear 2 may pass through the pressure relief structure 23 into the arc venting passage provided by the avoidance space 3 (opening 141), thereby enabling pressure and arc to be discharged at the second end 2d of the switchgear 2 of the prefabricated substation 100. Therefore, there is no need to design an arc venting space at the foundation, which effectively simplifies the design of foundation, reduces the cost of foundation, so as to facilitate the promotion and application of the prefabricated substation 100.

The term "avoidance space" mentioned herein refers to a space of the unit load device through which arc energy and pressure can be released to the outside. The avoidance space may be an open space or a space with a boundary. The term "arc venting passage" mentioned herein refers to a passage which is located inside the avoidance space and through which arc energy and pressure can be discharged. The arc venting passage may be an open passage or a passage with a boundary. For example, if the unit load device 1 is formed by support posts, both the avoidance space and the arc venting passage may be open; or if the unit load device 1 is formed by support posts and box panels, both the avoidance space and the arc venting passage may have boundaries.

In the first embodiment of the present application, the container 1a is in a frame structure. Thus, the container 1a itself has the opening 141. That is, there is no need to additionally provide the opening 141 on the original structure of the container. The structure of the container 1a is simplified, and thus the cost of the container 1a is reduced.

Since the container 1a is in the frame structure, the switchgear compartment 14 is also in a frame structure. Thus, the switchgear compartment 14 itself has the opening 141. That is, there is no need to additionally provide the opening 141 on the original structure of the container. The structure of the switchgear compartment 14 is simplified.

Continuing to refer to FIG. 1, in the first embodiment of the present application, container 1a includes an integrated base 11, a top frame 12, and support posts 13. The top frame 12 is connected to the integrated base 11 via the support posts 13. The top frame 12, the support posts 13, and the integrated base 11 delimit an integrated chamber 1c, part of which serves as the switchgear compartment 14. Thus, the frame structure for the container 1a is relatively simple, and the frame structure for the switchgear compartment 14 is also relatively simple. The term "frame structure" means that it is formed by a base and support posts.

The integrated base 11 may be a flat panel or a bracket, which is not limited in the first embodiment of the present application.

In order to improve the stability of the container 1a and facilitate the formation of the switchgear compartment 14, there are at least four support posts 13, which are positioned at the four corners of the integrated base 11 respectively.

Exemplarily, there are eight support posts 13, which are in two rows arranged in the third direction. There are four support posts 13 arranged in the second direction in each row. The switchgear compartment 14 is defined by two of the support posts 13 in each row, part of the top frame 12, and part of the integrated base 11.

In actual situations, the number of support posts 13 may be four, five, six, seven or others, which is not limited in the first embodiment of the present application. The cross section of the support post 13 may be circular, polygonal, annular, etc. which is not limited in the first embodiment of the present application.

The support post 13 may be perpendicular to the top frame 12, and may be perpendicular to the integrated base 11. Alternatively, the support post 13 may be inclined relative to the top frame 12, and may be inclined relative to the integrated base 11.

For ease of assembly and disassembly, the support post 13 is detachably connected to the integrated base 11, and is detachably connected to the top frame 12. Exemplarily, both the integrated base 11 and the top frame 12 are detachably connected to the support post 13 via threaded fasteners.

In order to improve the stability of the container 1a, both the integrated base 11 and the top frame 12 are fixedly connected to the support post 13. Exemplarily, the integrated base 11 and the top frame 12 are detachably fixed to the support post 13 via threaded fasteners.

The top frame 12 includes a first crossbeam 121 and a second crossbeam 122, and third crossbeams 123 intersecting the first and second crossbeams. The first crossbeam 121 and the second crossbeam 122 are arranged side by side, and the third crossbeams 123 are connected between the first crossbeam 121 and the second crossbeam 122. Both the first crossbeam 121 and the second crossbeam 122 are connected to the support posts 13. In this way, by adjusting the number of third crossbeams 123, the strength of the container 1a and thus the switchgear compartment 14 may be adjusted.

Exemplarily, as shown in FIG. 1, the switchgear compartment 14 is defined by two third crossbeams 123, part of the first crossbeam 121, part of the second crossbeam 122, part of the integrated base 11, and the four support posts 13. By increasing the number of third crossbeams 123 with respect to the switchgear compartment 14, the strength of the switchgear compartment 14 may be improved, and accordingly, the strength of the container 1a may be improved.

For ease of adjustment of the number of third crossbeams 123, both the first crossbeam 121 and the second crossbeam 122 are detachably connected to the third crossbeams 123. For example, both the first crossbeam 121 and the second crossbeam 122 are detachably connected to the third crossbeams 123 via threaded fasteners, clamping structures or other structures for achieving detachable connection.

For ease of installation and maintenance, both the first crossbeam 121 and the second crossbeam 122 are detachably connected to the support posts 13. For example, both the first crossbeam 121 and the second crossbeam 122 are detachably connected to the support posts 13 via threaded fasteners, clamping structures or other structures for achieving detachable connection.

For ease of installation, the first crossbeam 121 and the second crossbeam 122 are arranged in parallel, and the third crossbeams 123 are perpendicular to the first crossbeam 121 and the second crossbeam 122. Alternatively, the first crossbeam 121 may be inclined relative to the second crossbeam 122, and the third crossbeams 123 may be inclined relative to the first crossbeam 121, and the third crossbeams 123 may be inclined relative to the second crossbeam 122.

As shown in FIG. 5, in order to enhance the strength of the switchgear compartment 14, the top frame 12 further includes at least one oblique beam 124. The at least one oblique beam 124 connects the third crossbeam 123 and at least one of the first crossbeam 121 and the second crossbeam 122. Thus, by means of the oblique beam 124, the strength of the top frame 12 is improved, and accordingly, the strength of the entire switchgear compartment 14 is improved.

The at least one oblique beam 124 connected to the first crossbeam 121 and the at least one oblique beam 124 connected to the second crossbeam 122 may be connected to the same third crossbeam 123 or to different third crossbeams 123. In order to further improve the strength of the entire switchgear compartment 14, the oblique beam 124 connected to the first crossbeam 121 and the oblique beam 124 connected to the second crossbeam 122 are connected to the same third crossbeam 123.

For ease of adjustment of the strength of the switchgear compartment 14, if the at least one oblique beam 124 connects the first crossbeam 121 and the third crossbeam 123, both the first crossbeam 121 and the third crossbeam 123 are detachably connected to the oblique beam 124. If at least one oblique beam 124 connects the second crossbeam 122 and the third crossbeam 123, both the second crossbeam 122 and the third crossbeam 123 are detachably connected to the oblique beam 124. In this way, the strength of the switchgear compartment 14 may be adjusted by adding or removing the oblique beam 124.

In the above structure, the structure of the detachable connection will not be described herein, referring to the foregoing description.

In the first embodiment of the present application, the top frame 12 may be in another structure and is not limited to the above structure.

In the first embodiment of the present application, the container 1a may be in another structure. For example, a support frame is used to replace the support posts 13.

In the first embodiment of the present application, the switchgear compartment 14 may be in the frame structure, whereas other compartments of the container 1a may not be in the frame structure. For example, the other compartments of the container 1a are each in a box structure. Exemplarily, the other compartments are formed by multiple box panels and an integrated base 11.

In the first embodiment of the present application, the container 1a may be in the box structure. In the case of the box structure, the container 1a includes box panels, which form an integrated chamber 1c to accommodate electrical devices of the prefabricated substation 100. The term "box structure" means that it is formed and enclosed by box panels and a base

When the switchgear 2 malfunctions and requires repair or replacement, the switchgear 2 is removed out of the container 1a. As shown in FIGS. 1 and 2, for ease of replacement of the switchgear 2, a lifting structure 24 is provided at the second end 2d of switchgear 2. The avoidance space 3 (opening 141) is positioned on the side of the second end 2d of the switchgear 2 away from the first end 2c of the switchgear 2, and the avoidance space 3 (opening 141) is configured to allow the switchgear 2 to pass through. Thus, the switchgear 2 may be removed and replaced through the avoidance space 3 (opening 141) of container 1a, facilitating repair and replacement of the switchgear 2.

It should be noted that an opening area of the opening 141 is larger than a cross-sectional area of the switchgear 2. The plane in which the opening 141 is located may be parallel to or inclined relative to a cross section of the switchgear 2. For example, if the opening 141 and the second end face of the switchgear 2 are both rectangular, the length of the long side of the opening 141 is larger than that of the switchgear 2, and the length of the short side of the opening 141 is larger than that of the switchgear 2. Alternatively, If the opening 141 and the second end face of the switchgear 2 are both square, the length of the side of the opening 141 is larger than that of the switchgear 2.

It should be noted that the second end face of the switchgear 2 is an end face of the switchgear 2 at the second end 2d.

The above-mentioned lifting structure 24 may be implemented as a lifting lug 24a or another structure, which is not limited in the first embodiment of the present application.

### Second embodiment of the present application

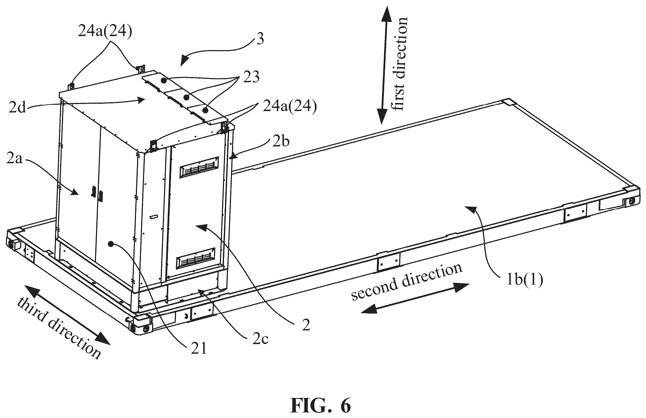

As shown in FIG. 6, a prefabricated substation 100 according to the second embodiment of the present application includes a unit load device 1 and a switchgear 2 disposed in the unit load device 1.

In the second embodiment of the present application, the unit load device 1 is implemented as a pallet 1b. The pallet 1b may be in a plate structure or a base structure, which is not limited in the embodiment of the present application.

The switchgear 2 has a first end 2c disposed on the pallet 1b and a second end 2d arranged opposite to the first end 2c. It may be understood that the first end 2c of the switchgear 2 is connected to the pallet 1b. The first end 2c and the second end 2d of the switchgear 2 are arranged in a first direction. The first direction may be considered as the height direction of the switchgear 2 or the height direction of the container 1a. The first end 2c may be considered as the bottom end of the switchgear 2, and the second end 2d may be considered as the top end of the switchgear 2. The pallet 1b and the switchgear 2 are arranged in the first direction.

Exemplarily, the pallet 1b is in the shape of a rectangular prism. The switchgear 2 is positioned at the end of the pallet 1b in a second or third direction. There is an angle formed between the second and third directions. For example, the second direction is perpendicular to the third direction, and the first direction is perpendicular to a plane defined by the second and third directions. In this way, the switchgear 2 is positioned close to the side, reducing the impact of pressure relief from the switchgear 2 on other electrical devices.

The second direction may be considered as the length direction of the pallet 1b, and the third direction may be considered as the width direction of the pallet 1b. In this case, the second direction is perpendicular to the third direction

In actual situations, the switchgear 2 may be positioned at any other location on the pallet 1b.

The switchgear 2 is an outdoor switchgear, and a pressure relief structure 23 is provided at the second end 2d of the switchgear 2. The arrangement of the pressure relief structure 23 will not be described herein, referring to the first embodiment of the present application.

Since the unit load device 1 is embodied as the pallet 1b, the pallet 1b does not cover the sides and top of the switchgear 2, forming an avoidance space 3 above the pallet 1b. The avoidance space 3 is positioned on the side of the pressure relief structure 23 facing away from the second end 2d of the switchgear 2 in the first direction, and the avoidance space 3 provides an arc venting passage. When pressure and arc is required to be discharged out of the switchgear 2, the gas and arc in the switchgear 2 may pass through the pressure relief structure 23 into the arc venting passage provided by the avoidance space 3, thereby enabling pressure and arc to be discharged at the second end 2d of the switchgear 2 of the prefabricated substation 100. Therefore, no arc venting space is required at the foundation, which effectively simplifies the design of foundation, reduces the cost of foundation, so as to facilitate the promotion and application of the prefabricated substation 100.

For ease of replacement of the switchgear 2, a lifting structure 24 is provided at the second end 2d of the switchgear 2. The avoidance space 3 is positioned on the side of the second end 2d of the switchgear 2 facing away from the first end 2c of the switchgear 2 in the first direction, and the avoidance space 3 is configured to allow the switchgear 2 to pass through. Thus, the switchgear 2 may be removed and replaced through the avoidance space 3 of the pallet 1b, facilitating replacement of the switchgear 2.

The arrangement of the lifting structure 24 will not be described herein, referring to the first embodiment of the present application.

In the second embodiment of the present application, the switchgear 2 and the unit load device 1 will not be explained here, referring to the first embodiment of the present application.

The technical features mentioned above and those shown individually in the drawings may be combined arbitrarily, as long as the combined features do not conflict with each other. All possible feature combinations are explicitly described in the present application. Any one of the multiple technical features included in the same statement may be used independently, not necessarily in conjunction with the other technical features.

Based on the above description of the disclosed embodiments, those skilled in the art may implement or carry out the present application. Various modifications made to these embodiments are apparent to those skilled in the art. The general principle defined herein may be implemented in other embodiments without departing from the spirit or scope of the present application. Therefore, the present application should not be limited to the embodiments disclosed herein, but has the widest scope in accordance to the concept and the novel features disclosed herein.

## Claims

1. A prefabricated substation, **characterized by** comprising:
a unit load device (1); and
a switchgear (2),
wherein the switchgear (2) has a first end (2c) disposed on the unit load device (1) and a second end (2d) arranged opposite to the first end (2c);
wherein a pressure relief structure (23) is provided at the second end (2d) of the switchgear (2), and the unit load device (1) has an avoidance space (3) for providing an arc venting passage; and
wherein the first end (2c) of the switchgear (2), the pressure relief structure (23) and the avoidance space (3) are arranged sequentially in a first direction in which the first end (2c) and the second end (2d) of the switchgear (2) are arranged.

2. The prefabricated substation according to claim 1, wherein the unit load device (1) is implemented as a container (1a) having a switchgear compartment (14) with an opening (141), the switchgear compartment (14) is configured to house the switchgear (2), and the opening (141) is configured as the avoidance space.

3. The prefabricated substation according to claim 2, wherein the switchgear compartment (14) is in a frame structure.

4. The prefabricated substation according to claim 2 or 3, wherein the container (1a) comprises an integrated base (11), support posts (13) and a top frame (12);
wherein the top frame (12) is connected to the integrated base (11) via the support posts (13); and
wherein the top frame (12), the support posts (13) and the integrated base (11) delimit an integrated chamber (1c), and at least part of the integrated chamber (1c) is configured as the switchgear compartment (14).

5. The prefabricated substation according to claim 4, wherein the top frame (12) comprises a first crossbeam (121), a second crossbeam (122) and third crossbeams (123); and
wherein the first crossbeam (121) and the second crossbeam (122) are arranged side by side, the third crossbeams (123) are connected between the first crossbeam (121) and the second crossbeam (122), and both the first crossbeam (121) and the second crossbeam (122) are connected to the support posts (13).

6. The prefabricated substation according to claim 5, wherein the top frame (12) further comprises at least one oblique beam (124), and the at least one oblique beam (124) is configured to connect the third crossbeam (123) and at least one of the first crossbeam (121) and the second crossbeam (122).

7. The prefabricated substation according to claim 2, wherein the container (1a) is in a box structure.

8. The prefabricated substation according to any of the preceding claims, wherein the unit load device (1) is implemented as a pallet (1b).

9. The prefabricated substation according to any of the preceding claims, wherein the pressure relief structure (23) comprises a pressure relief opening (231) and a pressure relief plate (232), the pressure relief opening (231) is disposed at the second end (2d) of the switchgear (2), and the pressure relief plate (232) is connected to a cabinet body (22) of the switchgear (2) and is configured to open and close the pressure relief opening (231).

10. The prefabricated substation according to claim 9, wherein at least part of the pressure relief plate (232) is detachably connected to the cabinet body (22).

11. The prefabricated substation according to claim 9 or 10, wherein one end of the pressure relief plate (232) is hinged to the cabinet body (22), and the other end of the pressure relief plate (232) is connected to the cabinet body (22) with a lap joint or adhesive.

12. The prefabricated substation according to any of the preceding claims, wherein the switchgear (2) has a cabinet door side (2a) and a back side (2b) opposite to the cabinet door side (2a), the pressure relief structure (23) is positioned at the second end (2d) of the switchgear (2), and is positioned farther from the cabinet door side (2a) than from the back side (2b).

13. The prefabricated substation according to any one of the preceding claims, wherein a lifting structure (24) is provided at the second end (2d) of the switchgear (2);
wherein the avoidance space (3) is positioned on a side of the second end (2d) of the switchgear (2) facing away from the first end (2c) of the switchgear (2) in the first direction; and
wherein the avoidance space (3) is configured to allow the switchgear (2) to pass through.

14. The prefabricated substation according to any of the preceding claims as far as comprising claim 5 or 6, wherein the switchgear compartment is delimited, defined or formed by the third crossbeams, the first crossbeam, the second crossbeam, the integrated base, and the support posts.

15. The prefabricated substation according to any of the preceding claims as far as comprising at least one of claims 4 to 6, wherein the container (1a) further has another compartment which is of a box structure formed at least by box panels and the integrated base.
